# EUROPÄISCHE PATENTSCHRIFT

(11) **EP 0 868 802 B1**
(45) Veröffentlichungstag und Bekanntmachung des Hinweises auf die Patenterteilung: **15.09.2004**
(21) Anmeldenummer: 97910402.3
(22) Anmeldetag: 01.10.1997
(51) Int. Cl.: H04L 25/49

(54) **OPTISCHE DATENÜBERTRAGUNG MITTELS PULSPOSITIONSMODULATION**
OPTICAL DATA TRANSMISSION BY PULSE POSITION MODULATION
TRANSMISSION DE DONNEES OPTIQUE PAR MODULATION D'IMPULSIONS EN POSITION

(30) Priorität: 24.10.1996 DE 19644174
(43) Veröffentlichungstag der Anmeldung: 07.10.1998
(73) Patentinhaber: Ziegler, Horst Prof. Dr.Dipl.-Phys., 33100 Paderborn (DE)
(72) Erfinder: Ziegler, Horst Prof. Dr.Dipl.-Phys., 33100 Paderborn (DE)
(74) Vertreter: Ostertag, Reinhard
(86) Internationale Anmeldenummer: PCT/EP1997/005399
(87) Internationale Veröffentlichungsnummer: WO 1998/018243

(56) Entgegenhaltungen:
- US-A- 2 017 087
- US-A- 4 787 093
- US-A- 5 214 526

## Beschreibung

Die Erfindung betrifft ein Verfahren zur Übertragung von digitalen Signalen über eine optoelektronische Datenstrecke sowie eine Vorrichtung zu seiner Durchführung.

Optoelektronische Datenübertragungsstrecken zur Übermittlung digitaler Signale werden unter anderem dann verwendet, wenn man eine galvanische Kopplung zwischen einer Datenquelle und einem Datenempfänger vermeiden will oder auch dann, wenn man Daten ohne Kabel von einer Datenquelle an einen Datenempfänger übermitteln will, z.B. Infrarot-Steuerungen.

In derartigen Übertragungsverfahren ist oft die Datenquelle ein batteriegetriebenes Gerät. Beispiele hierfür sind Verbrauchsmesser, insbesondere Wärmeverbrauchsmesser, Warmwasser- und Kaltwasser-Verbrauchsmeser, die in der Regel an Stellen eines Gebäudes installiert sind, wo nicht zugleich eine elektrische Spannungsversorgung zur Verfügung steht und/oder die unabhängig von externen Spannungsversorgungen arbeiten müssen, um Manipulationsversuche auszuschließen. Weitere Beispiele sind batteriebetriebene IR-Fernbedienungen.

Obwohl es mittlerweile optoelektronische Datenstrecken gibt, die mit geringer Energie betrieben werden können, wäre es wünschenswert, eine noch längere Betriebsdauer unter Verwendung einer vorgegebenen Langzeit-Batterie zu gewährleisten.

Zur Lösung dieser Aufgabe wird durch die Erfindung ein Verfahren mit den im Anspruch 1 angegebenen Merkmalen angegeben.

Bei dem erfindungsgemäßen Verfahren wird berücksichtigt, daß es unter den über eine optoelektronische Datenstrecke übermittelten digitalen Signalen solche gibt, die häufig auftreten (in Messanwendungen z.B. die Zahlen 0 bis 9), und andere, die nur selten benötigt werden. Erfindungsgemäß wird nun vorgeschlagen, die häufig benötigten digitalen Signale durch eine einzige Zeitscheibe innerhalb einer Sendeperiode zu codieren. Die Übermittlung eines solchen digitalen Signales läßt sich somit durch einen einzigen Lichtblitz bewerkstelligen, dessen Phasenlage zum Sende-Taktraster die zu übermittelnde Information enthält.

Aus der Telemetrie in Bohrlöchern ist ein Verfahren bekannt (US 4 787 093), bei welchem Druckimpulse konstanter Dauer in verschiedenen Zeitscheiben eines Zeitintervalls gesendet werden. Hierzu wird das Zeitintervall in Subintervalle Tp und Tmp unterteilt, wobei nur während Tp gesendet werden darf und jedem Tp ein Tmp folgt. Wenigstens ein Teil der zu übertragenden Zeichen wird durch eine einzige Zeitscheibe codiert, eine weitere Teilmenge durch Kombination zweier Zeitscheiben, usw. Dadurch ist eine gewisse Ökonomie des Energieverbrauchs senderseitig bereits möglich; allerdings erfolgen die Impulse während der gesamten Dauer einer Zeitscheibe, was wiederum energieaufwendig ist.

Daher wird erfindungsgemäß die lichtgebende Sendeeinheit jeweils nur für einen Bruchteil einer Zeitscheibe aktviert, so daß pro Lichtimpuls nur relativ wenig Energie verzehrt wird.

Vorteilhafte Weiterbildungen der Erfindung sind in Unteransprüchen angegeben.

Die Weiterbildung der Erfindung gemäß Anspruch 2 ermöglicht die Übermittlung einer weiteren Anzahl von digitalen Signalen unter Verwendung nur zweier Lichtblitze unterschiedlicher Lage bezüglich des Sendezeitrasters. Auch hier ist der Energiebedarf noch klein mit dem, den man aufwenden müßte, wenn man einfach Zeichen in üblicher Codierung, z.B. ASCII-Codierung über die Datenstrecke schicken würde.

Da die Synchronisierung des Empfangsteiles der Datenstrecke auf das Sendezeitraster nur selten durchgeführt zu werden braucht, kann man hierfür mehrere aufeinanderfolgende Lichtblitze verwenden, wie im Anspruch 3 angegeben.

Dabei ist die Weiterbildung der Erfindung gemäß Anspruch 4 im Hinblick auf ein zuverlässiges empfangsseitiges Wiedergewinnen der digitalen Signale von Vorteil.

Die Ansprüche 5 und 6 geben eine zweckmäßige Codierung wieder, die sich insbesondere für die Übertragung von Meßergebnissen eignet. Verwendet werden insgesamt vier Zeitscheiben, so daß die Zahl der pro Zeiteinheit übertragenen Zeichen bei den heute üblichen Halbleiter-Lichtquellen und Halbleiter-Lichtdetektoren im Bereich von etwa 50 Zeichen/s liegen kann, trotzdem aber nur wenige Lichtblitze für die Signalübertragung notwendig sind.

Dabei kann man gemäß Anspruch 6 nochmals Energie einsparen, wenn nur Dezimalziffern übertragen werden, da für deren Darstellung nur jeweils ein einzelner Lichtimpuls benötigt wird.

Mehrfach-Lichtimpulse werden gemäß Anspruch 7 zur Darstellung seltener benötigten Sonderzeichen (z.B. negatives Vorzeichen, Dezimalpunkt, Exponent, Zeichenketten-Endezeichen) benötigt. Mit dieser Codierung wird somit eine weitere Reduzierung des sendeseitigen Energiebedarfs erhalten, wobei immer noch in der Praxis etwa 15 Zeichen/s übertragen werden können, was für viele Anwendungen ausreicht.

Die Weiterbildung der Erfindung gemäß Anspruch 8 ermöglicht die Darstellung eines größeren Vorrates an Sonderzeichen bei kleiner Anzahl von Zeitscheiben pro Zeichenfenster.

Mit der Weiterbildung der Erfindung gemäß Anspruch 9 wird erreicht, daß bei Messungen, die sich über einen großen Bereich einer physikalischen Größe erstrecken, innerhalb des Meßbereiches dort, wo normalerweise eine genaue Überwachung gewünscht wird, mit hoher Auflösung Daten übertragen werden, während in weniger interessierenden Abschnitten des Meßbereiches durch den Codierungsvorgang zugleich eine Herabsetzung der Auflösung erfolgt.

Oft ist es von Interesse, an einer von einem Meßort abgelegenen Stelle den Absolutwert der gemessenen oder überwachten Größe zu kennen. Die vollständige Übertragung eines Meßwertes erfordert aber die Übermittlung aller Stellen des Meßwertes. Gemäß dem Vorschlag von Anspruch 10 werden normalerweise über die Datenübertragungsstrecke nur die Änderungen des gemessenen oder überwachten Wertes übermittelt und empfangsseitig aufintegriert. Die Änderungen des Meßwertes entsprechen aber in der Regel kleinen Zahlen, so daß nur wenige Zeichen übertragen werden müssen.

Durch Übermittlung des Absolutwertes in größeren zeitlichen Abständen und Abgleichen des empfängerseitig vorgesehenen Integrators auf den übermittelten Absolutwert wird ein Langzeit-Auseinanderdriften zwischen dem empfängerseitig zur Verfügung stehenden Meßwert und dem echten Meßwert verhindert, wie im Anspruch 11 angegeben.

Bei dem im Anspruch 12 angegebenen Verfahren kann das Überstellen eines vollständigen Absolutwertes der zu messenden Größe von der Auswerteeinheit her angefordert werden.

Mit der im Anspruch 13 angegeben Vorrichtung läßt sich die Zeitscheiben-Codierung der zu übertragenden Signale unter Verwendung einfacher elektronischer Standard-Schaltkreise und sehr variabel (Überschreiben des Codierspeichers) durchführen.

Eine Vorrichtung gemäß Anspruch 14 eignet sich zur Übertragung von Signalen aus unterschiedlichen Quellen, insbesondere auch zur abwechselnden Übertragung von Inkrementsignalen und Absolutwersignalen gemäß Anspruch 10.

Bei einer Vorrichtung gemäß Anspruch 15 ist die Reihenfolge und Frequenz, in welchen die unterschiedlichen Signale übertragen werden, einfach vorzugeben.

Hierbei kann man ein vorgegebenes Abfolgemuster der Übertragungen bei einer Vorrichtung gemäß Anspruch 16 von einer Auswerteinheit her beeinflussen, z.B. bei festgestellten Unregelmäßigkeiten oder in einer Zeit, in welcher nur wenig Meßwerte anfallen (bei Heizkostenzählern z.B. im Sommer).

Bei einer Vorrichtung gemäß Anspruch 17 werden die in der Auswerteeinheit empfangenen Daten automatisch auf verschiedene Auswertekreise verteilt.

Nachstehend wird die Erfindung anhand von Ausführungsbeispielen unter Bezugnahme auf die Zeichnung näher erläutert. In dieser zeigen:
- Figur 1:: ein Blockschaltbild einer unidirektionalen optoelektronischen Datenübertragungsstrecke, die in einer dezentral ausgelesenen Wärmeverbrauchs-Meßanordnung verwendet ist;
- Figuren 2 und 3:: den zeitlichen Verlauf verschiedener Signale, die in der Datenübertragungsstrecke nach Figur 1 verwendet werden; und
- Figur 4:: eine weitere Anwendung einer optoelektronischen Datenübertragungsstrecke, wie sie in Figur 1 dargestellt ist, für die laufende Überwachung der Temperatur, des Wasserverbrauches und des Wärmeverbrauches an einer Warmwasserleitung eines Gebäudes.

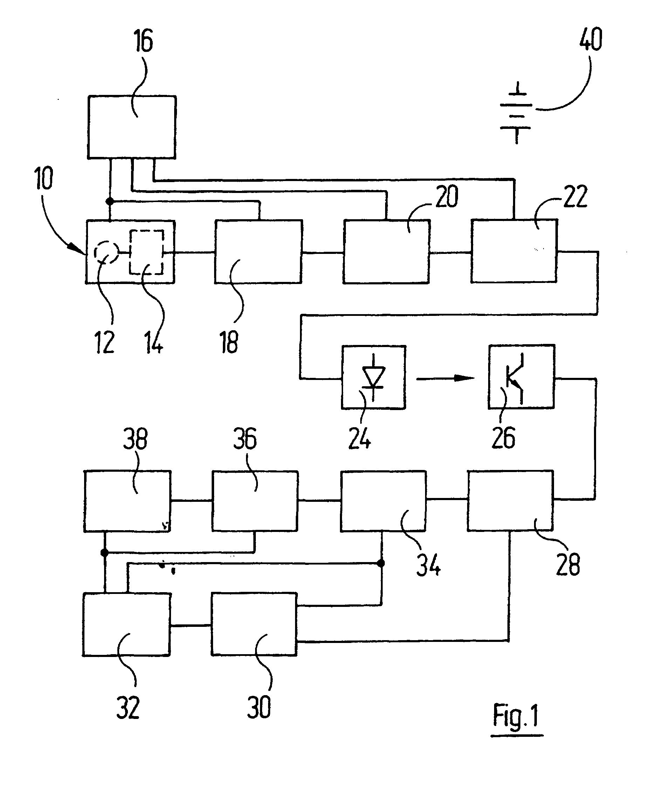

In Figur 1 ist mit 10 ein digitaler Temperaturfühler bezeichnet, der einen analogen Temperaturgeber 12 sowie einen Anlog/Digitalwandler 14 umfaßt. Der Temperaturfühler 10 wird durch eines der Ausgangssignale eines Taktgebers 16 getaktet, typischerweise in Abständen von etwa einer Minute. Das entsprechende Ausgangssignal des Taktgebers 16 aktiviert ferner einen Integrator (Zähler) 18, dessen Eingang mit dem Ausgang des Temperaturfühlers 10 verbunden ist. Das Ausgangssignal des Integrators 18 ist somit ein Maß für Wärmeabgabe durch eine Wärmequelle (z.B. Heizkörper), an welche der Temperaturfühler 10 thermisch angekoppelt ist.

Das Ausgangssignal des Integrators 18 wird in größeren zeitlichen Abständen, z.B. einmal pro Stunde, von einem Codierer 20 in spezieller, später noch genauer zu beschreibender Weise codiert. Das so codierte Ausgangssignal wird durch einen Parallel/Seriell-Umsetzer 22 gesteuert durch den Taktgeber 16 in eine elektrische Impulsfolge umgesetzt, welche auf die Steuerklemme einer optoelektronischen Sendeeinheit 24 gegeben wird, die in der Praxis eine LED umfaßt.

Das von der Sendeeinheit 24 abgegebene Licht gelangt auf eine optoelektronische Empfangseinheit 26, die in der Praxis einen Phototransistor umfassen kann.

Das Ausgangssignal der Empfangseinheit 26, die zur Signalformung geeignete Schaltkreise mit umfaßt, wird auf den Eingang eines Synchronisiersignal-Erkennungskreises 28 gegeben. Dieser erzeugt für einen Phasensteuerkreis 30 ein erstes Eingangssignal. Ein zweites Eingangssignal erhält der Phasensteuerkreis 30 von einem der Ausgänge eines empfangsseitigen Taktgebers 32, der Impulse mit gleicher Frequenz bereitstellt, mit welcher der Umsetzer 22 gesteuert wird. Der Phasensteuerkreis 30 erzeugt an seinem Ausgang ein Fehlersignal, welches den Phasenunterschied zwischen vom Erkennungskreis 28 festgestellten Phasensynchronisiersignalen und den vom Taktgeber 32 erhaltenen Signalen zugeordnet ist. Durch dieses Fehlersignal wird der Taktgeber 32 veranlaßt, seine Phasenlage auf die Phasenlage der empfangenen Signale einzustellen.

Durch das in der Phase nachgeführte Taktsignal wird eine Seriell/Parallel-Umsetzer 34 getaktet. Das von diesem abgebene Signal gelangt über einen Decodierer 36, der eine zur Operation des Codierers 20 inverse Operation durchführt, auf den Eingang eines Auswertegerätes 38, welches die einlaufenden Meßdaten weiterverarbeitet und die Ergebnisse der Weiterverarbeitung speichert und ggf. anzeigt. Bei diesem Gerät kann es sich z.B. um einen Prozeßrechner mit zugehöriger Peripherie handeln. Das Einlesen neuer Daten durch das Auswertegerät 38 wird ebenfalls vom Taktgeber 32 gesteuert.

Aus Gründen der einfachen Installation aber auch im Hinblick auf einen Schutz gegen Manipulationen sind der Temperaturfühler 10 und die Schaltkreise 12 bis 26 von einer Langzeitbatterie 40 her gespeist, und die gesamte Meßanordnung ist in einem verplombten Gehäuse eingeschlossen.

Die Datenübertragung über die optoelektronische Datenübertragungsstrecke erfolgt durch von der Sendeeinheit 24 ausgesandte Lichtimpulse. Um deren Anzahl insgesamt kleinzuhalten und somit einen lange Betrieb des Wärmemessers aus der Langzeitbatterie zu gewährleisten, werden die vom Integrator 18 abgegebenen Signale in spezieller Weise derart codiert, daß man für jede zu übertragende Stelle der Zahl, welches das Ausgangssignal des Integrators 18 repräsentiert, möglichst nur einen Lichtimpuls, maximal zwei Lichtimpulse benötigt.

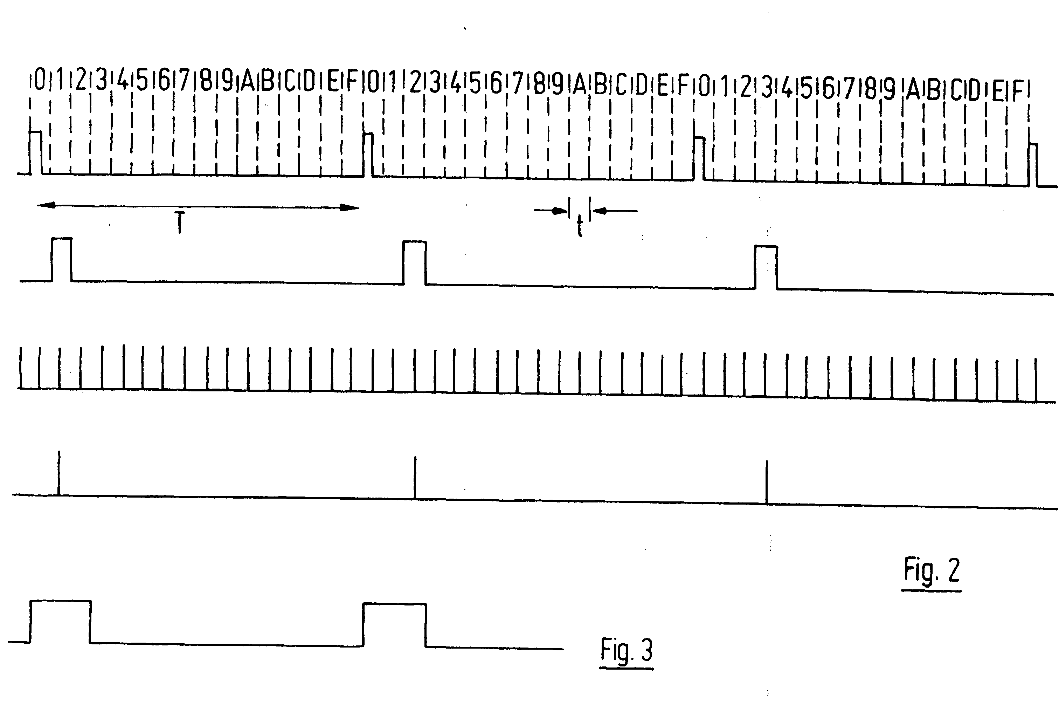

Beim Ausführungsbeispiel nach Figur 2 kann man 16 unterschiedliche Signale jeweils durch einen einzigen Lichtimpuls darstellen. Hierzu ist ein Zeichen-Fenster T in 16 kleine Zeitscheiben t gleicher Breite unterteilt. Dabei geben die Taktimpulse für den Umsetzer 22 jeweils den Beginn der Zeichen-Sendefenster vor. Die einzelnen Fenster sind mit "0" bis "9" sowie "A" bis "F" numeriert, wie in der obersten Zeile von Figur 2 dargestellt.

Die zweite Zeile von Figur 2 zeigt die Codierung der Ziffern "1", "2" und "3" durch Zuordnung einer entsprechenden Zeitscheibe im Zeichen-Fenster dar. Zusätzlich zu den Zahlen "0" bis "9" kann man fünf verschiedene Sonderzeichen übermitteln, die in der Zeichnung schematisch mit "A" bis "F" bezeichnet sind. Dabei kann z.B. "A" dem Dezimalpunkt, "B" dem Minuszeichen zugeordnet sein, während die anderen Zeichen bestimmte Steuerfunktionen ausüben können.

Im einzelnen kann somit die Codierung beispielsweise so aussehen:

Zahlen:

| Dezimalziffer | Zeitscheibe |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 0 | 10 |

Sonderzeichen:

| Bedeutung | Zeitscheibenmuster (Beispiel, 10 Zeitscheiben) |
|---|---|
| Fehler | 0, 1, 2, 3, 4 |
| Synchronisier/Startimpuls | 0, 1, 2 |
| Buchstabenkette | 9, 2 |
| Kettenende | 9, 3 |
| Leerraum | 9, 4 |
| Exponent | 9, 5 |
| Dezimalpunkt | 9, 6 |
| Gesamtwert positiv | 3, 1 |
| Gesamtwert verdoppeln | 3, 2 |
| Gesamtwert vervierfachen | 3, 4 |
| Gesamtwert verzehnfachen | 3, 0 |
| Gesamtwert negativ | 5, 1 |
| Gesamtwert negativ, verdoppeln | 5, 2 |
| Gesamtwert negativ, vervierfachen | 5, 4 |
| Gesamtwert negativ, verzehnfachen | 5, 0 |

Bei Erhalt eines Zeichens "Buchstabenkette" werden die sich anschließenden Zeichen im Auswertegerät 38 als Buchstaben interpretiert, wie später noch genauer dargelegt.

Die dritte Zeile von Figur 2 zeigt die auf den Takteingang des Umsetzers 22 jeweils in der Mitte einer Zeitscheibe liegenden gegebenen Taktimpulse, und in der vierten Zeile von Figur 2 erkennt man die am Ausgang des Umsetzers 22 bereitgestellten kurzen Steuerimpulse für die Sendeeinheit 24, mit welcher die Zeichenfolge "123" übertragen wird. In der Praxis kann die Breite dieser Steuerimpulse zusammen mit handelsüblichen Leuchtdioden, wie sie für optoelektronische Datenübertragungsstrecken verwendet werden, etwa 4 ms betragen.

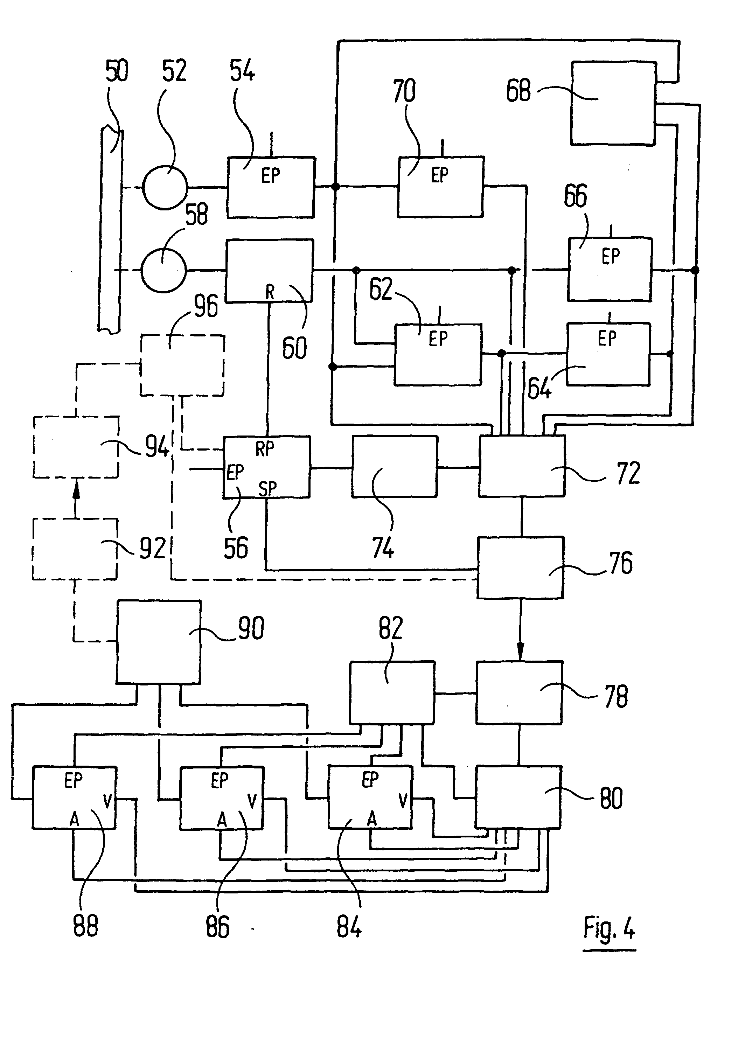

Figur 3 zeigt spezielle Synchronisierimpulse, die sich jeweils über drei benachbarte Zeitscheiben erstrecken und im Abstand T bereitgestellt werden, wenn eine Datenübertragung eingeleitet werden soll.

Der Erkennungskreis 28 erkennt die Synchronisierimpulse aufgrund ihrer größeren Länge und erzeugt für die ansteigende Kante dieser langen Impulse jeweils einen normal breiten Impuls der auf den einen Eingang des Phasensteuerkreises 30 gegeben wird. Diese breiten Impulse werden vom Befehls-Erkennungskreis 28 nicht auf den Umsetzer 34 weitergegeben.

Man erkennt, daß man bei der oben geschilderten Datenübertragungsstrecke Dezimalzahlen unter geringem Energieeinsatz optoelektronisch übermitteln kann. In der Praxis lassen sich größenordnungsmäßig 15 Zeichen pro Sekunde übertragen, was für in Abständen erfolgende Meßwertabfragen in vielen Langzeitanwendungen ausreichend ist.

Auch für viele weitere Anwendungen, bei denen die Menge der zu übermittelnden Zeichen klein ist, z.B. Infrarot-Fernbedienungen für Fernseher, Videorecorder usw. läßt sich die oben geschilderte reine Zeitscheiben-Codierung mit Vorteil einsetzen.

Wünscht man die Übertragung einer größeren Anzahl von Zeichen pro Zeiteinheit, so kann man die Zahl der Zeitscheiben kleiner wählen. So reichen offensichtlich zur Übertragung der Dezimalzahlen "0" bis "9" auch schon zehn Zeitscheiben aus. Für eine noch raschere Übertragung von Meßwerten kann man die Zahl der pro Zeiteinheit übertragbaren Zeichen nochmals dadurch vergrößern, daß man für einige der Zeichen auch die Kombination zweier Zeitscheiben als Codierung zuläßt. Die Codierung wird auch hier wieder so vorgenommen, daß man zur Darstellung des Zeichenvorrates möglichst wenig Lichtimpulse benötigt. Als Beispiel für eine solche Codierung sei der Fall betrachtet, in dem ein Zeichen-Fenster T nur vier Zeitscheiben t umfaßt. Die Zeitscheiben-Codierung der Zeichen läßt sich dann formal ähnlich zur BCD-Codierung darstellen, wobei die nebeneinandergestellten logischen Werte "1" und "0" aber nur die zeitliche Aufeinanderfolge von Zeitscheiben darstellen, in welchen ein Lichtimpuls von der Sendeeinheit 26 abgegeben wird bzw. nicht abgegeben wird.

Für die Dezimalziffern "0" bis "9" kann man bei Unterteilung eines Zeichenfensters in vier Zeitscheiben z.B. folgende Zeitscheibenmustercodierung wählen (Zeitscheibennummer von rechts (0) nach links (3) ansteigend):

| Dezimalziffer | Zeitscheibe(n) | Zeitsch.-Muster |
|---|---|---|
| 0 | 0 | 0001 |
| 1 | 1 | 0010 |
| 2 | 2 | 0100 |
| 3 | 3 | 1000 |
| 4 | 0, 1 | 0011 |
| 5 | 0, 2 | 0101 |
| 6 | 0, 3 | 1001 |
| 7 | 1, 2 | 0110 |
| 8 | 1, 3 | 1010 |
| 9 | 2, 3 | 1100 |

Bei dieser Art der Codierung benötigt man somit im Mittel für jede Dezimalziffer 1,6 Lichtimpulse.

Bei der oben vorgenommenen Codierung stehen noch weitere Zeichen zur Verfügung, die keinen Ziffern entsprechen (Sonderzeichen): vier weitere Zeichen, die mit drei Lichtimpulsen dargstellt werden können und ein Zeichen, welches mit vier Lichtimpulsen codiert werden kann. Diese mehr Energie zur Übertragung benötigenden Zeitscheibenkominationen werden nur selten benötigten Zeichen zugeordnet. In der Regel reicht es, wenn diese selten benötigten Zeichen nur einmal innerhalb einer Zeichenkette vorkommen. Vorzugsweise werden diese Zeichen am Zeichenkettenanfang eingesetzt, z.B. den höchstwertigen Digits einer Dezimalzahl.

So können z.B. bei der Übertragung von Sonderzeichen für das höchstwertige Digit bei Codierung mit vier Zeitscheiben pro Zeichenfenster folgende Bedeutungen vereinbart werden:

| Bedeutung | Zeitscheiben | Zeitsch.-Muster |
|---|---|---|
| Fehler | 0, 1, 2, 3 | 1111 |
| Synchronisier/Startimpuls | 0, 1, 2 | 0111 |
| Buchstabenkette | 0, 1, 3 | 1011 |
| Leeraum; Gesamtwert positiv | 0, 2, 3 | 1101 |
| Gesamtwert negativ | 1, 2, 3 | 1110 |

Ist das erste Zeichen einer Zeichenkette das Sonderzeichen "Buchstabenkette" werden im Auswertegerät ab dem Sonderzeichen jeweils zwei aufeinanderfolgende Ziffern zu einer zweistelligen Zahl zusammengefaßt, die somit zwischen "0" und "99" liegt. Zu dieser Zahl wird die Zahl "32" hinzuaddiert, und es wird dann der zur erhaltenen Summe gehörende 7-Bit-ASCII erzeugt. Auf diese Weise können somit auch kurze Text von der Meßeinheit an das Auswertegerät übermittelt werden.

Dem Auftreten eines solchen Mehrzeitscheiben-Codes innerhalb und/oder am Ende einer Zeichenkette wird durchgängig oder stellenabhängig, z.B. nur für die zweite Stelle der Zeichenkette, eine unterschiedliche Bedeutung zugewiesen, was für die verschiedenen Sonderzeichen unterschiedlich gehandhabt werden kann, z.B.:

| Bedeutung | Zeitscheiben | Zeitsch.-Muster |
|---|---|---|
| Dezimalpunkt (ab 2.) | 0, 1, 2 | 0111 |
| Exponentenzeichen (ab 3.) | 0, 1, 3 | 1011 |
| Wert verdoppeln (nur 2.) | 0, 1, 3 | 1011 |
| Wert vervierfachen (nur 2.) | 0, 2, 3 | 1101 |
| Wert verzehnfachen (nur 2.) | 1, 2, 3 | 1110 |

Bei dieser Art der Codierung liegt somit ein Teil der Information in der Stelle, an welcher das keine Dezimalziffer darstellende Sonderzeichen in der Zeichenkette auftritt.

Verwendet man mehr Zeitscheiben als vier, können diese weiteren Zeichen wieder stellungsunabhängige aus sich eindeutige Codierung erhalten, wie obenstehend für zehn Zeitscheiben schon gezeigt.

Für viele Anwendung ist es nicht notwendig, daß zwischen der Meßstelle und einer hiervon entfernten, über eine optelektronische Datenübertragungsstrecke angeschlossenen Überwachungsstelle laufend der Absolutwert der überwachten Größe übermittelt wird. Es reicht, wenn in kleineren Abständen nur die Änderungen der überwachten Größe übermittelt werden, so daß die Überwachungsstelle durch Aufintegration der Änderungen einen Überblick über den Absolutwert behält, wobei kleinere Abweichungen in Kauf genommen werden. In größeren zeitlichen Abständen wird dann der vollständige Absolutwert übertragen, und aufbauend auf diesem übertragenen Wert erfolgt dann wieder nur eine Fortschreibung aufgrund der übermittelten Inkrementdaten.

Figur 4 zeigt eine derartige Datenübertragung am Beispiel eines Warmwasserzählers zur Verwendung in einem Mehrfamilienwohnhaus.

Eine Wasserleitung ist schematisch bei 50 gezeigt. An sie ist Temperaturfühler 52 angekoppelt, an welchen ein A/D-Wandler 54 angeschlossen ist. Dieser wird von einem Taktgeber 56 her durch Aktivierungsimpulse EP getaktet.

An die Wasserleitung 50 ist ferner ein digitaler Durchflußzähler 58 angekoppelt, der jeweils nach Durchströmen eines vorgegebenen Elementarvolumens (in der Praxis 10 ml oder 100 ml) einen Impuls abgibt.

Die Zählimpulse des Durchflußfühlers 58 werden in einem Zwischenzähler 60 aufsummiert. Letzterer wird jeweils zum Ende eines Meß- und Übertragungszyklus durch einen Rückstellimpuls RP des Taktgebers 56 zurückgestellt.

Die Ausgangssignale von Temperaturfühler 52 und Durchflußfühler 58 werden ferner auf die beiden Eingänge eines digitalen Multiplizierers 62 gegeben. Dessen der momentanen Wärmeleistung entsprechendes Ausgangssignal wird auf den Eingang eines Wärmemengenzählers 64 gegeben. Das Ausgangssignal des Durchflußfühlers 58 wird ferner auf den Eingang eines Wasserzählers 66 gegeben. Die Ausgangssignale von Temperaturfühler 52, Wärmemengenzähler 64 und Wasserzähler 66 werden ferner auf ein Display 68 gegeben.

Das Ausgangssignal des Temperaturfühlers 52 wird ferner auf einen digitalen Differenzierkreis 70 gegeben, der z.B. jeweils bei Erhalt eines Taktimpulses das anstehende Eingangssignal vom im vorhergehenden Takt erhaltenen Eingangssignal abzieht und das neu erhaltene Signal zur Weiterverwendung im nächsten Zyklus speichert.

Eine Signalweiche 72 ist mit den Ausgängen des Temperaturfühlers 52 und des Durchflußfühlers 58, des Multiplizierers 62 sowie des Wärmemengenzählers 84 und des Wasserzählers 66 verbunden und stellt je nach Ansteuerung durch einen Weichen-Steuerkreis 74 eines dieser Signal an seinem Ausgang bereit. Der Weichen-Steuerkreis 74 arbeitet seinerseits in Abhängigkeit von weiteren Ausgangssignalen des Taktgebers 56. Das ganze erfolgt vorzugsweise so, daß die Signalweiche 72 in kleineren zeitlichen Abständen die Ausgangssignale des Zwischenzählers 60 und des Differenzierkreises 70 nacheinander bereitstellt, während die größere Datenmengen umfassende Ausgangssignale von Wärmemengenzähler 64 und Wasserzähler 66 nur in größeren zeitlichen Abständen übermittelt werden.

Das jeweils am Ausgang der Signalweiche 72 bereitgestellte digitale Signal wird über ein sendeseitiges Modemteil 76 einer optoelektronischen Datenübertragungsstrecke, welches die in Figur 1 gezeigten Schaltkreise 20, 22, 24 umfaßt, auf eine empfängerseitiges Modemteil 78 gegeben, welches die Schaltkreise 26 bis 36 von Figur 1 umfaßt.

Eine empfängerseitige Signalweiche 80 verbindet ihren Eingang jeweils mit einem Vielzahl von Ausgängen. Dies erfolgt unter Steuerung durch einen empfängerseitigen Taktgeber 82, der vom empfängerseitigen Modemteil 78 in der oben stehend unter Bezugnahme auf Figur 1 geschilderten Art und Weise synchronisiert wird.

Der Taktgeber 82 steuert nach dem der Programmierung des Taktgebers 56 entsprechenden Schaltmuster die Steuerder Signalweiche 80 an und aktiviert ferner entsprechend einen von drei empfängerseitigen Zählern 84, 86, 88, die zum Fortschreiben der Temperaturmessung, der Wasserverbrauchsmessung und der Wärmeverbrauchsmessung dienen.

Je einer der Ausgänge der Signalweiche 80 ist mit einer Addierklemme A eines zugeordneten der Zähler 84, 86, 88 verbunden, während weitere Ausgangsklemmen der Signalweiche 80 mit Voreinstellklemmen V der Zähler 84, 86 verbunden sind. Diese Ausgänge der Zähler 84, 86, 88 sind mit einem Auswertegerät 90 verbunden, welches z.B. ein Mikroprozessor mit zugehörigere Peripherie, eingeschlossen Monitor, sein kann.

Bei der oben beschriebenen Anlage zur Fernmessung der Temperatur, des momentanen Wasserdurchflusses und des Wasserverbrauchs sowie des Wärmeverbrauchs erfolgt die eigentliche Verbrauchsmessung gegen Manipulation geschützt an der Verbrauchsstelle selbst (die Fühler, die Auswerteelektronik und das Modemteil befinden sich in einem gekapselten und verplombten Gehäuse).

An der zentralen Überwachungsstelle hat man stets eine aktuelle Übersicht über die Verbrauchsmessungen, darüber hinaus aber auch eine stets aktuelle Information über den momentanen Wasserdurchfluß und die momentane Temperatur. Auf diese Weise kann man Fehler in der Anlage, z.B. einen Wasserrohrbruch oder einen ausgefallenen Warmwassererzeuger rasch erkennen.

In der Praxis reichen für die Fortschreibung der Temperaturmessung und der Wärmeverbrauchsmessung sowie der Wasserverbrauchsmessung an der zentralen Überwachungsstelle zwei Zeichen für die Übertragung der Inkrementinformation aus, die jeweils in einer Vier-Zeitscheiben-Darstellung übertragen werden.

Aufgrund der oben geschilderten speziellen Codierung benötigt man gerade zur Übermittlung von kleinen Zahlen nur wenige Lichtimpulse. Diese Zahlen sind aber bei der Inkrementübertragung die am häufigsten vorkommenden.

Bei den oben geschilderten Weisen der Zeichencodierung kann man die Dezimalzahlen "0" bis "99" exakt als Kette von zwei Zeichen codieren. Die Dezimalzahlen "10" bis "990" können mit dem Multiplikator "10" mit einer mittlerer Auflösung von fünf codiert werden.

Bei anderer Auswahl des Multiplikators oder anderer Vereinbarung eines Multiplikator-Zeitscheibenmusters kann man somit den gesamten Übertragungsbereich verkleinern und entsprechend auch den Auflösungssprung zwischen den beiden Übertragungsbereichen verändern. Vereinbart man z. B. als Multiplikator die Zahl 2, so können die Zahlen "0" bis "99" genau, die Zahlen "2" bis "199" mit einer Unschärfe von eins codiert werden.

Durch Vereinbarung einer Mehrzahl von Multiplikatoren (ggf. uunter Verzicht auf sonstige Sonderzeichen) kann man auch mehr als zwei Zahlen-Übertragungsbereiche unterschiedlicher Genauigkeit einrichten. Hat man z.B. nur positive Meßwerte, kann man als Faktoren 2, 4 und 10 vereinbaren, Wodurch man wahlweise eine mittlere Auflösung von eins, zwei bzw. fünf erhält.

Man kann somit mit für Überwachungszwecke ausreichender Genauigkeit durch Übertragung von zwei Zeichen die üblicherweise bei Messungen vorkommenden positiven und negativen Zahlen mit ausreichender Genauigkeit und unter geringem Energieeinsatz an eine Überwachungsstelle übermitteln.

Verwendet man das oben geschilderte Prinzip für einen Wasserzähler und enthält die Sendeeinheit 24 eine LED, die jeweils etwa 4 ms angesteuert wird, um eine Zeitscheibe zu markieren, und erfolgt die Ausgabe des im Zwischenzähler 60 gespeicherten Wasserinkrementes in Abständen von 36 Sekunden durch zwei Zeichen, so hat man einen mittleren Strombedarf von 0,24 µA. Arbeitet der Durchflußfühler 58 mit einem Elementarvolumen von 10 ml, kann man Zähler mit einem maximalen Durchsatz von bis zu 20 m³/h (Nenndurchsatz 10 m³/h) betreiben, wobei die Auflösung einer externen Durchflußanzeige dann im 10 ml-Modus bei Durchflüssen bis zu 8 m³/h nur ein l/h ist. Bei Durchsätzen bis 16 m³/h wäre die Durchsatz-Ungenauigkeit 2 l/h und darüber dann 4 l/h. Arbeitet der Durchflußzähler 58 mit einem Elementarvolumen von 100 ml, kann man Zähler mit einem Maximaldurchsatz bis zu 200 m³/h (Nenndurchsatz 100 m³/h) mit Fernauslösung realisieren, wobei die Durchflußauflösung an der Fernauslesestelle natürlich entsprechend um den Faktor 10 schlechter ist.

Reduziert man den Abstand zwischen zwei Inkrement-Übertragungen auf 4 Sekunden, erhöht sich der Strombedarf der Sendeeinheit auf 2,1 µA. Der Durchflußbereich bei einem Durchflußfühler 58 mit Elementarvolumen von 10 ml ist dann begrenzt auf 180 m³/h (bei Elementarvolumen von 100 ml auf 1 800 m³/h).

Aus der obenen gegebenen detaillierten Analyse des Energiebedarfes und der Auflösung eines Wasserzählers mit Fernauslesung ist ersichtlich, daß man mit sehr geringem Strombedarf für die Praxis weit ausreichende Genauigkeiten der Fernauslesung erzielt.

Aus der oben unter Bezugnahme auf Figur 4 gegebenen Beschreibung eines Warmwasserzählers ist ersichtlich, daß dort drei Inkremente zur Fortschreibung vorgegebener Ausgangswerte an die entfernte Auslesestelle übermittelt werden: Änderung der Temperatur, der Wasserdurchsatz und die momentane Wärmeleistung. Zur Übermittlung dieser drei Inkremente benötigt man drei Paare von zweistelligen Zahlen. Bei ansonsten gleichen Übertragungsverhältnissen ergibt sich ein Strombedarf von 0,7 µA, wenn die Inkrement-Übermittlung alle 36 Sekunden erfolgt, bei Vergrößerung des Abstandes zwischen aufeinanderfolgenden Inkrement-Übertragungen auf 60 Sekunden beträgt der Energiebedarf noch 0,4 µA.

Wie weiter oben schon dargelegt, werden die bei Meßwert-Übertragungen häufigen Zahlen erfindungsgemäß in einer oder zwei Zeitscheiben codiert. Die verbleibenden Zeitscheiben-Codierungen können für wenig verwendete Sonderzeichen benutzt werden, z.B. um den empfängerseitigen Taktgeber zu synchronisieren, wie oben beschrieben, dem Empfänger mitzuteilen, daß nunmehr anstelle von Inkrementwerten Absolutwerte übermittelt werden, daß besondere Betriebszustände vorliegen (z.B. Störungsfall, Überschreiten eines Stichtages, usw.). Auch können die Sonderzeichen generell zum Aufwecken von der Empfangseinheit 26 nachfolgenden empfängerseitigen Schaltungsteilen verwendet werden. Umgekehrt kann eines dieser durch eine Vielzahl von zeitscheibencodierten Sonderzeichen dazu verwendet werden, die Funktionsfähigkeit der Übertragungsstrecke und an sie angeschlossener Schaltkreise zu überprüfen, indem ein solches Sonderzeichen in größeren zeitlichen Abständen (z.B. 5 Minuten) gesendet wird.

In Abwandlung der obigen Ausführungsbeispiele kann man zwischen dem Auswertegerät 38 bzw. 90 und der Meßwert-Erfassungseinheit auch eine bidirektionale optoelektronische Datenübertragungsstrecke einrichten, um der Meßwert-Erfassungseinheit Befehle und Daten überstellen zu können.

Das Auswertegerät 90 arbeitet dann, wie in Figur 4 gestrichelt eingezeichnet, mit einem sendeseitigen Modemteil 92 zusammen. Dieses bildet zusammen mit einem empfängerseitigen Modemteil 94 eine optoelektronische Datenübertragungsstrecke, wie oben unter Bezugnahme auf die Modemteile 76 und 78 beschrieben. Das Modemteil 94 ist mit einem Eingang eines Prozessors 94 der Meßwert-Erfassungseinheit verbunden, welche ihrerseits den Taktgeber 56 steuert.

Bei dem empfängerseitigen Modemteil 94, welches ebenfalls aus der Langzeitbatterie der Meßeinheit betrieben werden muß, arbeiten die verschiedenen Schaltkreise, insbesondere die Empfangseinheit 26 getaktet in kleinen Zeitfenstern, die bei der Mitte der Zeitscheiben liegen. Typischerweise wird das lichtempfindliche Element des Modemteils 94, welches der Empfangseinheit 26 von Figur 1 entspricht, in der Mitte einer Zeitscheibe und kurz vorher bzw. kurz nachher nach der Mitte einer Zeitscheibe aktiviert. Auf diese Weise wird zuverlässig festgestellt, wenn bei der Mitte einer Zeitscheibe ein Lichtimpuls auf das lichtempfindliche Element entfällt. Umgekehrt verbraucht das lichtempfindliche Element und der nachgeschaltete Signalverarbeitungskanal nur wenig Strom.

Bei einer Meßwert-Erfassungseinheit, die über eine solche bidirektionale optoelektronische Datenübertragungstrecke mit einem Auswertegerät verbunden ist, kann man auf eine interne Uhr verzichten und die nur in größeren zeitlichen Abständen erfolgende Ausgabe von Absolutwerten auf Anforderung vom Auswertegerät her vornehmen. Auch hierdurch wird der Stromverbrauch in der Meßwert-Erfassungseinheit gering gehalten.

Durch die nur bei der Mitte einer Zeitscheibe erfolgende Ansteuerung der Sendeeinheit 24 erhält man unter Berücksichtigung der üblichen Zeitkonstanten einer CMOS-Empfangseinheit zwar eine Erniedrigung der Empfindlichkeit um maximal 30%, dem kann man aber durch Erhöhung des Speisestromes für die Sendeeinheit 24 um 30% begegnen. Insgesamt erhält man nach wie vor eine erhebliche Energieeinsparung gegenüber Systemen, bei welchen die Sendeeinheit 24 über die gesamte Zeit eines Bits aktiviert wird. Für die erhöhten Speisestromimpulse, mit denen die Sendeeinheit 24 beaufschlagt wird, spielt ein hoher Batterie-Innenwiderstand keine störende Rolle, da der mittlere Strom gleich bleibt und ein üblicher 10 µF-Pufferkondensator kurze Stromspitzen von bis zu 10 mA gut abpuffern kann, da er sich in entsprechend langen Pausen zwischen aufeinanderfolgenden hohen Stromimpulsen wieder aufladen kann.

Für praktische Ausführungsbeispiele einer erfindungsgemäßen Datenübertragungsstrecke werden somit in der batteriegetriebenen Meßwert-Erfassungseinheit eine Langzeitbatterie und ein leckstromarmer Kondensator zur Pufferung derselben von etwa 10 µF benötigt. Im übrigen werden sowohl in der Meßwert-Erfassungeinheit als auch auf der Seite des Auswertgerätes quartzgenaue serielle Schnittstellen (UARTs) verwendet, und die Steuerung der sendeseitigen Leuchtdioden erfolgt jeweils über Transistoren oder Treiberbausteine, da Schnittstellen von in der Meßwert-Erfassungseinheit bzw. im Auswertegerät enthaltenen Mikroprozessoren Spitzenströme von bis zu 10 mA nicht zuverlässig abgeben und auch nicht aufnehmen können.

Zur Zeitscheibencodierung der zunächst in Paralleldarstellung vorliegenden Meßwerte umfaßt der Codierer 20 vorzugsweise einen Codierspeicher, dessen Adressierklemmen mit dem gerade zu übertragenden Zeichen beaufschlagt sind und dessen Speicherzellen Bitmuster enthalten, die den den Zeichen entsprechenden Zeitscheibenmustern entsprechen. Dieser Codierspeicher kann ein Festwertspeicher sein, im Falle der in Figur 4 gestrichelt eingezeichneten Variante aber auch ein Schreib/Lesespeicher, sodaß die Codierung vom Auswertegerät 90 her über den Prozessor 96 geändert werden kann, der hierzu mit dem Codierspeicher verbunden ist.

Ähnlich kann der Decodierer 36 einen Decodierspeicher aufweisen, der mit den in Paralleldarstellung umgesetzten empfangenen Signalmustern adressiert wird und dessen Speicherzellen die den einzelnen Zeitscheibenmustern zugeordneten Zeichen enthält.

## Patentansprüche

1. Verfahren zur Übertragung von digitalen Signalen über eine optoelektronische Datenstrecke, bei welchem eine lichtabgebende Sendeeinheit (24) gemäß den zu übertragenden Daten angesteuert wird und eine auf Licht ansprechende Empfangseinheit (26) das von der Sendeeinheit abgegebene modulierte Licht in elektrische Signale rückwandelt,
**dadurch gekennzeichnet, daß**
die digitalen Signale in Zeitscheibencodierte Übertragungssignale umgesetzt werden, wobei zumindest eine Teilmenge der Zeichen des zu übertragenden Zeichenvorrates durch eine einzige Zeitscheibe codiert wird, und daß die Ausgangssignale der Empfangseinheit (26) in zur Zeitscheiben-Codierung inverser Weise in digitale Signale rückumgesetzt werden, wobei die lichtabgebende Sendeeinheit (24) jeweils nur für einen Bruchteil einer Zeitscheibe aktiviert wird.

2. Verfahren nach Anspruch 1, **dadurch gekennzeichnet, daß** eine weitere Teilmenge der Zeichen des zu übertragenden Zeichenvorrates durch die Kombination zweier Zeitscheiben codiert wird.

3. Verfahren nach Anspruch 1 oder 2, **dadurch gekennzeichnet, daß** Synchronisierimpulse durch zwei oder mehr aufeinanderfolgende Zeitscheiben codiert werden.

4. Verfahren nach einem der vorhergehenden Ansprüche, **dadurch gekennzeichnet, daß** die Aktivierungszeiten der Sendeeinheit (24) jeweils bei der Mitte einer Zeitscheibe liegen.

5. Verfahren nach einem der Ansprüche 1 bis 4, **dadurch gekennzeichnet, daß** die Anzahl der zur Codierung eines Zeichens zur Verfügung stehenden Zeitscheiben vier ist und die Codierung der Hälfte der Dezimalzahlen "0" bis "9" durch jeweils eine einzelne Zeitscheibe und die Codierung des Restes der Dezimalzahlen jeweils durch eine Kombination zweier Zeitscheiben erfolgt, z.B. wie folgt:
| Dezimalziffer | Zeitscheibe(n) | Zeitsch.-Muster |
|---|---|---|
| 0 | 0 | 0001 |
| 1 | 1 | 0010 |
| 2 | 2 | 0100 |
| 3 | 3 | 1000 |
| 4 | 0, 1 | 0011 |
| 5 | 0, 2 | 0101 |
| 6 | 0, 3 | 1001 |
| 7 | 1, 2 | 0110 |
| 8 | 1, 3 | 1010 |
| 9 | 2, 3 | 1100 |

6. Verfahren nach einem der Ansprüche 1 bis 4, **dadurch gekennzeichnet, daß** die Zahl der zur Codierung eines Zeichens zur Verfügung stehenden Zeitscheiben zehn ist und die Codierung der Dezimalziffern jeweils durch eine Zeitscheibe erfolgt, z.B. wie folgt:
| Dezimalziffer | Zeitscheibe |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 0 | 10 |

7. Verfahren nach Anspruch 5 oder 6, **dadurch gekennzeichnet, daß** weitere Zeitscheibenkombinationen zumindest eine der folgenden Bedeutungen haben:
| Bedeutung | Zeitscheibenmuster (Beispiel, 10 Zeitscheiben) |
|---|---|
| Fehler | 0, 1, 2, 3, 4 |
| Synchronisier/Startimpuls | 0, 1, 2 |
| Buchstabenkette | 9, 2 |
| Kettenende | 9, 3 |
| Leerraum | 9, 4 |
| Exponent | 9, 5 |
| Dezimalpunkt | 9, 6 |
| Gesamtwert positiv | 3, 1 |
| Gesamtwert verdoppeln | 3, 2 |
| Gesamtwert vervierfachen | 3, 4 |
| Gesamtwert verzehnfachen | 3, 0 |
| Gesamtwert negativ | 5, 1 |
| Gesamtwert negativ, verdoppeln | 5, 2 |
| Gesamtwert negativ, vervierfachen | 5, 4 |
| Gesamtwert negativ, verzehnfachen | 5, 0 |

8. Verfahren nach einem der Ansprüche 1 bis 7, **dadurch gekennzeichnet, daß** zumindest eine Zeitscheibenkombination an mindestens zwei unterschiedlichen Stellen der Zeichenkette jeweils unterschiedliche Bedeutung hat.

9. Verfahren nach einem der Ansprüche 1 bis 8, wobei die digitalen Signale von einer Meßeinheit bereitgestellte Meßwerte physikalischer Größen wie Temperatur, Fluiddurchsatz oder eine Verbrauchsgröße sind, **dadurch gekennzeichnet, daß** bei der Codierung zumindest in einem Teilbereich der Gesamtvariationsbreite der physikalischen Größe eine Mehrzahl unterschiedlicher benachbarter Meßwerte in ein gleiches codiertes Übertragungssignal umgesetzt wird.

10. Verfahren nach Anspruch 9, **dadurch gekennzeichnet, daß** die Übertragungssignale Inkrementen der Meßwerte entsprechen und empfängerseitig in einer mit der Empfangseinheit verbundenen Auswerteeinheit aufintegriert werden.

11. Verfahren nach Anspruch 10, **dadurch gekennzeichnet**, in zeitlichen Abständen digitale Signale über die Datenstrecke geschickt werden, die Absolutwerten der gemessenen physikalischen Größen entsprechen und mit mindestens einem Überschreib-Steuerzeichen versehen sind, und daß der in der Auswerteeinheit aufintegrierte Wert durch den übermittelten Absolutwert überschrieben wird, wenn ein Überschreib-Steuerzeichen erhalten wird.

12. Verfahren nach Anspruch 11, wobei eine bidirektionale optoelektronische Datenübertragungsstrecke verwendet wird, **dadurch gekennzeichnet, daß** von der Meßeinheit zur Auswerteeinheit ein einem Absolutwert entsprechendes digitales Signal übertragen wird, wenn zuvor von der Auswerteeinheit ein Absolutwert-Sendesteuersignal erhalten wurde.

13. Vorrichtung zur Durchführung des Verfahrens gemäß einem der Ansprüche 1 bis 12 für digitale Signale in Form von Zeichen in Paralleldarstellung, mit einem mit Zeichen in Paralleldarstellung beaufschlagten Parallel/ Seriell-Umsetzer (22), mit einer durch diesen gesteuerten lichtabgebende Sendeeinheit (24), mit einer dem von der Sendeeinheit (24) ausgesandten Licht ausgesetzten Empfangseinheit (26) und mit einem an diese angeschlossenen Seriell/Parallel-Umsetzer (34), **dadurch gekennzeichnet, daß** der Eingang des Parallel/Seriell-Umsetzers (22) mit dem Ausgang eines adressierbaren Codierspeichers (20) verbunden ist, der mit den zu übertragenden Zeichen adressiert wird und in seinen Speicherzellen der Zeitscheibencodierung entsprechende Bitmuster enthält, der Ausgang des Seriell/Parallel-Umsetzers (34) mit Adressierklemmen eines Decodierspeichers (36) verbunden ist, in dessen Speicherzellen die den Zeitscheibencodierungen entsprechenden Zeichen abgelegt sind, und daß die lichtabgebende Sendeeinheit (24) jeweils nur für einen Bruchteil einer Zeitscheibe aktiviert wird.

14. Vorrichtung nach Anspruch 13, **dadurch gekennzeichnet, daß** die Adressierklemmen des Codierspeichers (20) über eine steuerbare Signalweiche (72) mit einer Mehrzahl von von Signalquellen (60, 62, 64, 6&, 70) verbindbar ist.

15. Vorrichtung nach Anspruch 14, **dadurch gekennzeichnet, daß** die Signalweiche (72) durch eine Zeitsteuerung (56, 74) zwischen ihren verschiedenen Stellungen umgeschaltet wird.

16. Vorrichtung nach Anspruch 14 oder 15, **dadurch gekennzeichnet, daß** die Signalweiche (72) über eine zweite Datenübertragungsstrecke (92, 94) durch eine Auswerteeinheit (80-90) steuerbar ist.

17. Vorrichtung nach einem der Ansprüche 14 bis 16, **dadurch gekennzeichnet, daß** eine mit dem Decodierspeicher verbundene Auswerteeinheit (80-90) eine Mehrzahl von Auswertekreisen (84, 86, 88) umfaßt, die über eine zweite steuerbare Signalweiche (80) mit dem Ausgang eines Modemteiles (78) verbunden sind, welches mit einem zweiten Modemteil (76) zusammenarbeitet, das mit dem Ausgang der ersten steuerbaren Weiche (72) verbunden ist, und daß die beiden steuerbaren Signalweichen (72, 80) gemäß einem gemeinsamen Schaltmuster angesteuert werden.

## Claims

1. Method of transmitting digital signals via an optoelectronic data path in which a light-emitting transmitting unit (24) is driven in accordance with the data to be transmitted and a receiving unit (26) that responds to light reconverts the modulated light emitted by the transmitting unit into electrical signals, **characterized in that** the digital signals are converted into time-slice-encoded transmission signals, wherein at least a subset of the characters of the character fond to be transmitted is encoded by a single time slice and **in that** the output signals of the receiving unit (26) are reconverted into digital signals in a way that is the inverse of time-slice-encoding, wherein the light-emitting transmitting unit (24) is activated in each case only for a fraction of a time slice.

2. Method according to Claim 1, **characterized in that** a further subset of the characters of the character fond to be transmitted is encoded by combining two time slices.

3. Method according to Claim 1 or 2, **characterized in that** synchronization pulses are encoded by two or more consecutive time slices.

4. Method according to any one of the preceding claims, **characterized in that** the activation times of the transmitting unit (24) are situated in each case in the centre of a time slice.

5. Method according to any one of Claims 1 to 4, **characterized in that** the number of time slices available for encoding a character is four, and half the decimal numbers "0" to "9" are encoded by a single time slice in each case and the rest of the decimal numbers are encoded in each case by a combination of two time slices, for example as follows:
| Decimal digit | Time slice(s) | Time slice pattern |
|---|---|---|
| 0 | 0 | 0001 |
| 1 | 1 | 0010 |
| 2 | 2 | 0100 |
| 3 | 3 | 1000 |
| 4 | 0, 1 | 0011 |
| 5 | 0, 2 | 0101 |
| 6 | 0, 3 | 1001 |
| 7 | 1, 2 | 0110 |
| 8 | 1, 3 | 1010 |
| 9 | 2, 3 | 1100 |

6. Method according to any one of Claims 1 to 4, **characterized in that** the number of time slices available for encoding a character is ten and the decimal digits are each encoded by a time slice, for example as follows:
| Decimal digit | Time slice |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 0 | 10 |

7. Method according to Claim 5 or 6, **characterized in that** further time-slice combinations have at least one of the following meanings:
| Meaning | Time-slice pattern (example, 10 time slices) |
|---|---|
| Error | 0, 1, 2, 3, 4 |
| Synchronization/start pulse | 0, 1, 2 |
| Letter chain | 9, 2 |
| Chain end | 9, 3 |
| Space | 9, 4 |
| Exponent | 9, 5 |
| Decimal point | 9, 6 |
| Total value positive | 3, 1 |
| Double total value | 3, 2 |
| Quadruple total value | 3, 4 |
| Multiply total value by ten | 3, 0 |
| Total value negative | 5, 1 |
| Double negative total value | 5, 2 |
| Quadruple negative total | |
| value | 5, 4 |
| Multiply negative total value by ten | 5, 0 |

8. Method according to any one of Claims 1 to 7, **characterized in that** at least one time-slice combination has in each case a different meaning at at least two different points in character chain.

9. Method according to any one of Claims 1 to 8, wherein the digital signals are measured values provided by a measuring unit of physical variables such as temperature, fluid throughput or a load variable, **characterized in that** a plurality of different adjacent measured values are converted into an identical encoded transmission signal at least in a subregion of the total variation width during the coding.

10. Method according to Claim 9, **characterized in that** the transmission signals correspond to increments in the measured values and are integrated at the receiver end in an evaluation unit connected to the receiving unit.

11. Method according to Claim 10, **characterized in that** digital signals that correspond to absolute values of the measured physical variables and are provided with at least one overwrite control character are sent via the data path at time intervals and **in that** the value integrated in the evaluation unit is overwritten by the absolute value transmitted if an overwrite control character is received.

12. Method according to Claim 11, wherein a bi-directional optoelectronic data transmission path is used, **characterized in that** a digital signal corresponding to an absolute value is transmitted from the measuring unit to the evaluation unit if an absolute-value transmission control signal has previously been received from the evaluation unit.

13. Device for performing the method in accordance with any one of Claims 1 to 12 for digital signals in the form of characters in parallel representation, comprising a parallel/serial converter (22) fed with characters in parallel representation, comprising a light-emitting transmitting unit (24) controlled by the latter, comprising a receiving unit (26) exposed to the light emitted by the transmitting unit (24) and comprising a serial/parallel converter (34) connected to the latter, **characterized in that** the input of the parallel/serial converter (22) is connected to the output of an addressable encoding memory (20) that is addressed with the characters to be transmitted and contains bit patterns corresponding to the time-slice encoding in its memory cells, and **in that** the output of the serial/parallel converter (34) is connected to addressing terminals of a decoding memory (36) in whose memory cells the characters corresponding to the time-slice encoding are stored, and **in that** the light-emitting transmitting unit (24) is activated in each case only for a fraction of a time slice.

14. Device according to Claim 13, **characterized in that** the addressing terminal of the encoding memory (20) can be connected to a plurality of signal sources (60, 62, 64, 66, 70) via a controllable signal gating circuit (72).

15. Device according to Claim 14, **characterized in that** the signal gating circuit (72) is switched between its various positions by a time control (56, 74).

16. Device according to Claim 14 or 15, **characterized in that** the signal gating circuit (72) can be controlled by an evaluation unit (80-90) via a second data transmission path (92, 94).

17. Device according to any one of Claims 14 to 16, **characterized in that** an evaluation unit (80-90) connected to the decoding memory comprises a plurality of evaluation circuits (84, 86, 88) that are connected via a second controllable signal gating circuit (80) to the output of a modem section (78) that interacts with a second modem section (76) that is connected to the output of the first controllable gating circuit (72), and **in that** the two controllable signal gating circuits (72, 80) are activated in accordance with a common switching pattern.

## Revendications

1. Procédé de transmission de signaux numériques via un circuit de données optoélectronique, dans lequel une unité émettrice de lumière (24) est commandée en fonction des données à transmettre et une unité réceptrice réagissant à la lumière (26) reconvertit la lumière modulée émise par l'unité émettrice en signaux électriques,
**caractérisé par le fait que**
les signaux numériques sont convertis en signaux de transmission codés en tranches de temps, au moins une partie des caractères du stock de caractères à transmettre étant codée par une seule tranche de temps, et que les signaux de sortie de l'unité réceptrice (26) sont reconvertis en signaux numérique de manière inverse au codage en tranches de temps, l'unité émettrice de lumière (24) n'étant activée à chaque fois que pendant une fiaction d'une tranche de temps.

2. Procédé selon la revendication 1, **caractérisé par le fait qu'**une autre partie des caractères du stock de caractères à transmettre est codée par la combinaison de deux tranches de temps.

3. Procédé selon la revendication 1 ou 2, **caractérisé par le fait que** des impulsions de synchronisation sont codées par deux ou plus tranches de temps consécutives.

4. Procédé selon l'une des revendications précédentes, **caractérisé par le fait que** les temps d'activation de l'unité émettrice (24) se situent à chaque fois au milieu d'une tranche de temps.

5. Procédé selon l'une des revendications 1 à 4, **caractérisé par le fait que** le nombre de tranches de temps disponibles pour le codage d'un caractère est de quatre et que le codage de la moitié des chiffres décimaux «0» à «9» est réalisé chaque fois par une seule tranche de temps et le codage du reste des chiffres décimaux par une combinaison de deux tranches de temps, p. ex. comme suit :
| Chiffre décimal | Tranche(s) de temps | Séquence de tranches de temps |
|---|---|---|
| 0 | 0 | 0001 |
| 1 | 1 | 0010 |
| 2 | 2 | 0100 |
| 3 | 3 | 1000 |
| 4 | 0, 1 | 0011 |
| 5 | 0, 2 | 0101 |
| 6 | 0, 3 | 1001 |
| 7 | 1, 2 | 0110 |
| 8 | 1, 3 | 1010 |
| 9 | 2, 3 | 1100 |

6. Procédé selon l'une des revendications 1 à 4, **caractérisé par le fait que** le nombre de tranches de temps disponibles pour le codage d'un caractère est de dix et que le codage des chiffres décimaux est réalisé chaque fois par une tranche de temps, p. ex. comme suit :
| Chiffre décimal | Tranche de temps |
|---|---|
| 1 | 1 |
| 2 | 2 |
| 3 | 3 |
| 4 | 4 |
| 5 | 5 |
| 6 | 6 |
| 7 | 7 |
| 8 | 8 |
| 9 | 9 |
| 0 | 10 |

7. Procédé selon la revendication 5 ou 6, **caractérisé par le fait que** les autres combinaisons de tranches de temps ont au moins l'une des significations suivantes :
| Signification | Séquence de tranches de temps (exemple, 10 tranches de temps) |
|---|---|
| Erreur | 0, 1, 2, 3, 4 |
| Impulsion de synchronisation/début | 0, 1, 2 |
| Chaîne de lettres | 9, 2 |
| Fin de chaîne | 9, 3 |
| Espace | 9, 4 |
| Exposant | 9, 5 |
| Signe décimal | 9,6 |
| Valeur totale positive | 3, 1 |
| Doubler la valeur totale | 3, 2 |
| Quadrupler la valeur totale | 3, 4 |
| Décupler la valeur totale | 3, 0 |
| Valeur totale négative | 5, 1 |
| Doubler la valeur totale négative | 5, 2 |
| Quadrupler la valeur totale négative | 5, 4 |
| Décupler la valeur totale négative | 5, 0 |

8. Procédé selon l'une des revendications 1 à 7, **caractérisé par le fait qu'**au moins une combinaison de tranches de temps placée à au moins deux positions différentes de la chaîne de caractères a dans chaque cas une signification différente.

9. Procédé selon l'une des revendications 1 à 8, dans lequel les signaux numériques sont des valeurs de mesure de grandeurs physiques telles que température, débit de fluide ou une grandeur de consommation mises à disposition par une unité de mesure, **caractérisé par le fait que**, lors du codage, au moins dans une partie de la largeur de variation totale de la grandeur physique, une pluralité de valeurs de mesure voisines différentes sont converties en un signal de transmission codé de la même manière.

10. Procédé selon la revendication 9, **caractérisé par le fait que** les signaux de transmission correspondent à des incréments des valeurs de mesure et sont intégrés côté récepteur dans une unité d'évaluation reliée à l'unité réceptrice.

11. Procédé selon la revendication 10, **caractérisé par le fait que** des signaux numériques sont envoyés à intervalles de temps via le circuit de données, lesquels signaux numériques correspondent à des valeurs absolues des grandeurs physiques mesurées et sont munis d'au moins un caractère de commande d'écrasement, et que la valeur intégrée dans l'unité d'évaluation est écrasée par la valeur absolue transmise quand un caractère de commande d'écrasement est reçu.

12. Procédé selon la revendication 11, dans lequel on utilise un circuit de transmission de données optoélectronique, **caractérisé par le fait que** l'unité de mesure transmet à l'unité d'évaluation un signal numérique correspondant à une valeur absolue lorsque l'unité d'évaluation a auparavant reçu un signal de commande d'émission de valeur absolue.

13. Dispositif pour la réalisation du procédé selon l'une des revendications 1 à 12 pour des signaux numériques sous la forme de caractères en représentation parallèle, avec un convertisseur parallèle/série (22) alimenté en représentation parallèle, avec une unité émettrice de lumière (24) commandée par celui-ci, avec une unité réceptrice (26) exposée à la lumière envoyée par l'unité émettrice (24) et avec un convertisseur série/parallèle (34) relié à celle-ci, **caractérisé par le fait que** l'entrée du convertisseur parallèle/série (22) est reliée à la sortie d'une mémoire de codage (20) adressable, laquelle est adressée par les caractères à transmettre et contient dans ses cellules de mémoire les codages binaires correspondant au codage en tranches de temps, et que la sortie du convertisseur série/parallèle (34) est reliée aux bornes d'adressage d'une mémoire de décodage (36) dans les cellules de mémoire de laquelle sont enregistrés les caractères correspondant aux codages en tranches de temps, et que l'unité émettrice de lumière (24) n'est activée à chaque fois que pendant une fraction d'une tranche de temps.

14. Dispositif selon la revendication 13, **caractérisé par le fait que** les bornes d'adressage de la mémoire de codage (20) peuvent être reliées à une pluralité de sources de signaux (60, 62, 64, 66, 70) via un multiplexeur de signaux commandable (72).

15. Dispositif selon la revendication 14, **caractérisé par le fait que** les différentes positions du multiplexeur de signaux (72) sont commutées par une commande temporisée (56, 74).

16. Dispositif selon la revendication 14 ou 15, **caractérisé par le fait que** le multiplexeur de signaux (72) peut être commandé par une unité d'évaluation (80 - 90) via un deuxième circuit de transmission de données (92, 94).

17. Dispositif selon l'une des revendications 14 à 16, **caractérisé par le fait qu'**une unité d'évaluation (80 - 90) reliée à la mémoire de décodage comprend une pluralité de circuits d'évaluation (84, 86, 88) qui sont reliés via un deuxième multiplexeur de signaux commandable (80) à la sortie d'une partie modem (78), laquelle coopère avec une deuxième partie modem (76) qui est reliée à la sortie du premier multiplexeur commandable (72), et que les deux multiplexeurs de signaux commandables (72, 80) sont commandés selon une séquence de commande commune.
